(19) Europäisches Patentamt
European Patent Office
Office européen des brevets

(11) Publication number: 0 213 738 B1

(12) **EUROPEAN PATENT SPECIFICATION**

(45) Date of publication of the patent specification: 13.06.90

(51) Int. Cl.[5]: B24D 3/28

(21) Application number: 86305788.1

(22) Date of filing: 28.07.86

(54) **Coated abrasive product having radiation curable binder.**

(30) Priority: 07.08.85 US 763331

(43) Date of publication of application: 11.03.87 Bulletin 87/11

(45) Publication of the grant of the patent: 13.06.90 Bulletin 90/24

(84) Designated Contracting States: AT CH DE FR GB IT LI SE

(56) References cited:
CH-A- 507 781
DD-A- 160 038
DE-A- 2 247 103
DE-A- 2 607 551
DE-A- 3 139 813
US-A- 4 126 428

(73) Proprietor: MINNESOTA MINING AND MANUFACTURING COMPANY, 3M Center, P.O. Box 33427, St. Paul Minnesota 55133-3427(US)

(72) Inventor: Boettcher, Thomas E. Minnesota Mining and, Manufacturing Co. 2501 Hudson Road P.O. Box 33427, St. Paul Minnesota 55133-3427(US)
Inventor: Thalacker, Victor P. Minnesota Mining and, Manufacturing Co. 2501 Hudson Road P.O. Box 33427, St. Paul Minnesota 55133-3427(US)

(74) Representative: Baillie, Iain Cameron et al, c/o Langner Parry Isartorplatz 5, D-8000 München 2(DE)

EP 0 213 738 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Background of the Invention

This invention relates to coated abrasive products having a resinous binder which holds and supports abrasive granules on a backing sheet.

Coated abrasives generally comprise a flexible backing upon which adhesive holds and supports a coating of abrasive granules. The backing may be paper, cloth, film, vulcanized fiber, etc. or a combination of one or more of these materials. The abrasive granules may be formed of flint, garnet, aluminum oxide, alumina-zirconia, diamond, silicon carbide, etc. Popular present day binders are phenolic resins, hide glue, and varnish. Phenolic resins include those of the phenol-aldehyde type. Besides phenolic resins, hide glue, and varnish, other known resinous binder materials employed in the preparation of coated abrasive products include epoxy resins, ureaformaldehyde resins, and polyurethane resins.

The coated abrasive may employ a "make" coat of resinous binder material which is utilized to secure the ends of the abrasive granules onto the sheet as the granules are oriented and a "size" coat of resinous binder material over the make coat which provides for firm adherent bonding of the abrasive granules to the sheet. The size coat resin may be of the same material as the make coat resin or of a different resinous material.

In the manufacture of coated abrasives, the make coat resinous binder and abrasive granules are first applied to the backing, then the size coat resinous binder is applied, and finally, the construction is fully cured. Generally, thermally curable binders provide coated abrasives having excellent properties, e.g. heat resistance. Thermally curable binders include phenolic resins, epoxy resins, and alkyd resins. With polyester or cellulose backings, however, curing temperatures are limited to about 130°C. At this temperature, cure times are long. The long cure times necessitate the use of festoon curing areas. Disadvantages of festoon curing areas include formation of defects at the suspension rods, inconsistent cure on account of temperature variations in the large festoon ovens, sagging of the binder, and shifting of abrasive granules. Furthermore festoon curing areas require large amounts of space and large amounts of energy.

It has been proposed to use radiation curing processes to avoid the disadvantages of thermal curing processes in the manufacture of coated abrasives. U.S. Patent 4 047 903 discloses an epoxy-acrylic binder and electron irradiation to manufacture coated abrasives. U.S. Patent 4 345 545, U.S. Patent 4 457 766 and British Patent 2 087 263A disclose a method for electron beam curing of resin coated webs in the manufacture of coated abrasives. Examples of electron beam curable resinous binders disclosed therein include urethane-acrylates and epoxy-acrylates. The binders disclosed in these patents are inferior to thermally curable binders with respect to thermal stability, surface hardness, and grinding performance.

US 4 126 428 discloses a coated abrasive product including abrasive granules which are supported on and adherently bonded to at least one major surface of a backing sheet by make coating of a first resinous binder material and a size coating of a second resinous binder material. At least one of the said resinous materials is polyisocyanurate resin. The produced by trimerization of aromatic polyisocyanate and has dispersed throughout a plurality of minute capsules which have permeable shell walls comprised of partially polymerized isocyanate and which may contain residual liquid catalyst for trimerization of said polyisocyanate. The permeable capsule shell walls are impermeable to said liquid catalyst at room temperature but permeable to said catalyst at temperatures above 50°C.

US 4 126 428 also discloses a method of making coated abrasive products having the steps of

(1) uniformly coating a backing sheet with a make coat of a first resinous material in liquid form;
(2) depositing a plurality of abrasive granules uniformly over the surface of said make coat of first resinous material;
(3) curing said first resinous material to adherently bond said granules to said backing sheet surface;
(4) coating over said make coat and said granules with a size coat of a second resinous material; and
(5) curing the resultant coated product until said second resinous material is solid.

SUMMARY OF THE INVENTION

The present invention provides a coated abrasive product comprising abrasive granules which are supported on and adherently bonded to at least one major surface of a backing sheet by a make coat of a first resinous binder material and a size coat of a second resinous binder material, at least one of said first resinous binder material or said second resinous binder material comprising a copolymer formed from a mixture comprising (1) at least one monomer selected from the group consisting of isocyanurate derivatives having at least one terminal or pendant acrylate group and isocyanate derivatives having at least one terminal or pendant acrylate group, and (2) at least one aliphatic or cycloaliphatic acrylic or methacrylic acid ester monomer having at least one terminal or pendant acrylate group.

The preferred monomer of the isocyanurate/isocyanate group have a heterocyclic ring configuration, the preferred monomer being the reaction product of a mixture of acrylic acid and methacrylic acid with

tris(hydroxyalkyl)isocyanurate. The preferred aliphatic or cycloaliphatic monomer of the group having at least one acrylate group is trimethylolpropanetriacrylate. The copolymer can be formed by exposing a mixture containing the aforementioned monomers to conventional sources of electromagnetic radiation, preferably sources of ionizing radiation.

The invention also provides a coated abrasive product comprising abrasive granules which are supported on and adherently bonded to at least one major surface of a backing sheet by a resinous binder material, said resinous binder material comprising a copolymer formed from a mixture comprising (1) at least one monomer selected from the group consisting of isocyanurate derivatives having at least one terminal or pendant acrylate group and isocyanate derivatives having at least one terminal or pendant acrylate group, and (2) at least one aliphatic or cycloaliphatic acrylic or methacrylic acid ester monomer having at least one terminal or pendant acrylate group.

The performance of the coated abrasive of the present invention equals or exceeds that of coated abrasives formed with thermally curable phenolic resins, particularly with respect to grinding performance, hardness, and thermal stability. The coated abrasive of this invention demonstrates improved performance over radiation curable coated abrasives heretofore known, particularly with respect to thermal stability, surface hardness, and grinding performance.

Preferred embodiments are defined in the dependent claims.

## DETAILED DESCRIPTION

The conventional components going to form the coated abrasive product of the invention will be selected from those typically used in this art. The backing, as previously mentioned, may be formed of paper, cloth, vulcanized fiber, polymeric film or any other backing material known for this use. The abrasive granules may be of any conventional grade utilized in the formation of coated abrasives and may be formed of flint, garnet, aluminum oxide, alumina:zirconia, diamond and silicon carbide, etc., or mixtures thereof. The frequency of the abrasive granules on the sheet will also be conventional. The abrasive granule may be oriented or may be applied to the backing without orientation, depending upon the requirements of the particular coated abrasive product.

The coated abrasive product of the invention may also include such modifications as are known in this art. For example, a back coating such as pressure-sensitive adhesive may be applied to the nonabrasive side of the backing and various supersizes, such as zinc stearate, may be applied to the abrasive surface to prevent abrasive loading, and others.

The binders for the coated abrasive of this invention comprise copolymers formed by the copolymerization of comonomers selected from two classes. The reaction mixture must contain at least one comonomer from each class. The first class of monomers includes isocyanurate derivatives or isocyanate derivatives having at least one terminal or pendant acrylate group. As used herein, "acrylate" includes both acrylate and methacrylate. The second class of aliphatic or cycloaliphatic monomers includes acrylic acid esters. These monomers must contain at least one terminal or pendant acrylate group.

The monomers of isocyanurate derivatives can be represented by the following structure:

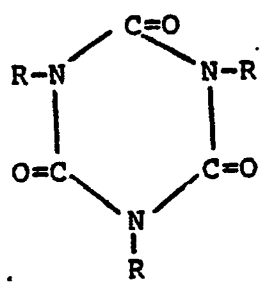

I

where each R can be the same or different and represents a group containing at least one terminal or pendant acrylate or methacrylate group. Preferably, R represents

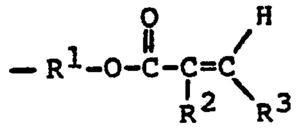

(Ia)

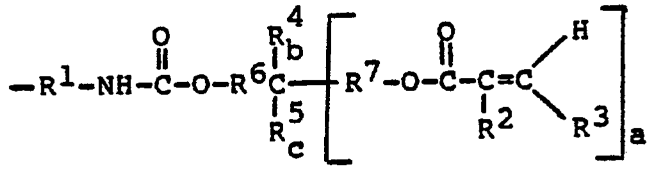

(Ib)

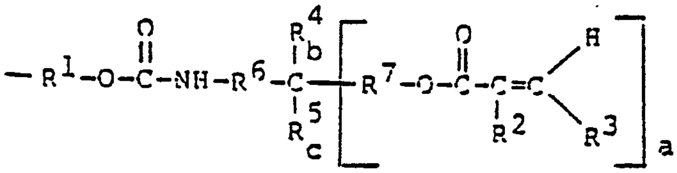

(Ic)

where

$R^1$ represents a divalent alkylene group having, for example, from 1 to 20 carbon atoms, preferably from 1 to 10 carbon atoms,

$R^2$ represents $-H$ or $-CH_3$,

$R^3$ represents $-H$ or $-CH_3$,

$R^4$ represents hydrogen, an alkyl group having, for example, 1 to 20 carbon atoms, an arylalkyl group having, for example, 6 to 26 carbon atoms,

$R^5$ represents hydrogen, an alkyl group having, for example, 1 to 20 carbon atoms, an arylalkyl group having, for example, 6 to 26 carbon atoms,

$R^6$ represents a divalent alkylene group having, for example, from 1 to 20 carbon atoms, preferably from 1 to 10 carbon atoms,

$R^7$ represents a covalent bond or a divalent alkylene group having, for example, from 1 to 20 carbon atoms, preferably, 1 to 10 carbon atoms,

a represents an integer from 1 to 3, inclusive,

b represents 0 or 1,

c represents 0 or 1, and

$a + b + c = 3$.

The moieties represented by $R^1$, $R^6$, $R^7$ can be straight chain, branched, or cyclic. If cyclic, the cyclic ring can contain 5 or 6 ring atoms.

Isocyanurate monomers suitable for the present invention can be prepared according to methods described in U.S. Patents 3 932 401, 4 145 544, 4 288 586, 4 324 879, 4 485 226.

The preferred monomers of acrylic isocyanate derivatives can be represented by the following structure:

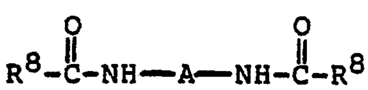

II

where A represents a divalent alkylene group having, for example, from 1 to 20 carbon atoms, preferably 1 to 10 carbon atoms, $R^8$ can be the same or different and represents

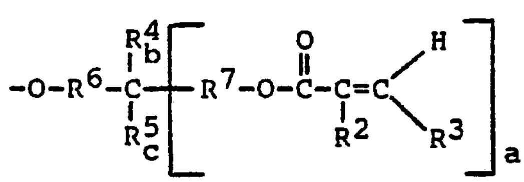

where a, b, c, $R^2$, $R^3$, $R^4$, $R^5$, $R^6$, $R^7$ are as defined above.

A can be straight chain, branched chain, or if sufficiently long, cyclic. Because of availability of starting materials, A is preferably

$-CH_2-C(CH_3)_2-CH_2-CH(CH_3)-CH_2-CH_2-$.

The monomers in the heterocyclic ring configuration are preferred because polymers formed from them are more durable, particularly under high temperature grinding conditions.

The preferred aliphatic or cycloaliphatic monomers having at least one terminal or pendant acrylate group can be represented by the following structure:

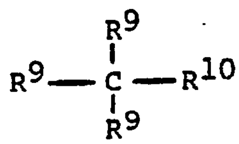

III

where

each $R^9$ can be the same or different, and

$R^9$ represents H or

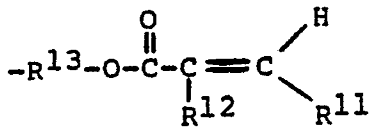

$R^{10}$ represents alkyl group having, for example, 1 to 10 carbon atoms,

$R^{11}$ represents H or $-CH_3$,

$R^{12}$ represents H or $CH_3$,

$R^{13}$ represents a covalent bond or a divalent alkylene group having, for example, from 1 to 20 carbon atoms, provided that at least one $R^9$ is not H.

The moiety represented by $R^{13}$ can be straight chain, branched, or cyclic. If cyclic, the cyclic ring can contain 5 or 6 ring atoms.

Acrylate monomers of Formula III suitable for the present invention include the mono- or polyfunctional esters of acrylic, methacrylic, or crotonic acids, for example, methyl, ethyl, propyl, butyl, hexyl or hydroxyalkyl esters of these acids, and aromatic monomers such as vinyl toluene, styrenes, divinylbenzene and allylesters. Acrylic ester monomers suitable for this invention are commercially available.

The ratio of monomer I or monomer II to monomer III can range from about 1:3 to about 3:1, and preferably ranges from about 1.5:1 to about 1:1.5.

The copolymerizable monomers themselves can act as diluents to control the viscosity of the coating resin without imparting the pollution effects of non-reactive solvents.

In order to prepare the composition for preparing the binder, the monomers, along with any fillers, catalysts, and other additives are first mixed together in a suitable vessel. The thus-formed mixture is then applied to the surface upon which the coating is to be formed, e.g. the backing for the make coat, the layer of abrasive mineral for the size coat.

The copolymers useful in forming the binder of this invention are preferably formed and cured by means of electromagnetic radiation, more preferably ionizing radiation, e.g., electron beam radiation having an energy of 0.1 to 10 Mrad, preferably 1 to 10 Mrad. The amount of radiation used depends upon the degree of cure desired of the monomers used to prepare the copolymers. Typical electron radiation doses allow processing speeds of up to 300 m/min. The rate of curing with a given level of radiation varies according to the thickness as well as the density and nature of composition. Other sources of ionizing radiation suitable for curing the binders of this invention include gamma-radiation and X-ray. Ultraviolet radiation can also be used to form and cure the copolymers of the binder of this invention. In addition, after the binder is cured by means of radiation, it can be post-cured by means of thermal energy in order to fully cure any copolymer that may be in grit shadow during radiation exposure. Alternatively, the copolymers can be formed and cured by means of thermal energy. If thermal energy is employed, either for post-curing or for primary curing, it is preferable to include a thermal curing catalyst in the composition containing the monomers. Conventional peroxide curing catalysts, e.g. benzoyl peroxide, can be employed when thermal curing is utilized.

The make coat and the size coat can be cured simultaneously or separately. Cure can be performed in air, but is preferably performed in a nitrogen atmosphere. When cured separately, the make coat is cured in air because it is generally desired to have the surface of the make coat not fully cured at the time of the size coat application to allow the curing of the size coat to effect a bond between the two coats. Either the make coat or size coat can be thermally cured, typically with the addition of a proper catalyst. However, it is preferred that both make coat and size coat be radiation curable to retain the desired processing advantages.

It is not necessary that both the make coat and size coat be formed of the binder of the present invention. If the size coat is formed of the binder of this invention, the make coat can be formed of a conventional binder material, e.g phenolic resins, hide glue, varnish, epoxy resins, urea-formaldehyde resins,

polyurethane resins. If the make coat is formed of the binder of this invention, the size coat can be formed of a conventional binder material. Of course, both the make coat and size coat can be formed from a binder or binders of the present invention.

It is also contemplated that a single binder coat can be employed, rather than a make coat and a size coat. However, it is preferred that both a make coat and size coat be utilized.

The properties and performance of coated abrasives according to the invention are equal to or superior to those of coated abrasives having binders comprising phenolic resin. Properties such as Barcol hardness, temperature stability, binding strength, and durability under grinding conditions of the binders of this invention meet or exceed those properties exhibited by binders comprising phenolic resin. The cured resin of the abrasive products of this invention results in superior thermal resistance to binder degradation which is brought about by high speed grinding. Coated abrasive products employing the resinous binder of this invention are amenable to water cooling.

In addition, the binder of the present invention does not require a solvent, thereby eliminating the need for solvent removal and pollution abatement problems.

In the examples which follow, the following abbreviations are used:

AA - Acrylic acid
TMPTA - Trimethylol propane triacrylate
TATHEIC - Triacrylate of tris(hydroxy ethyl) isocyanurate
NVP - N-vinyl-2-pyrrolidone
HMDI - Tris(Hexamethylene diisocyanate)
HMDI-T7 - Tris(Hexamethylene diisocyanate) having 7 acrylate groups
HMDI-T9 – Tris(Hexamethylene diisocyanate) having 9 acrylate groups
N-BUMA – N-butyl urethane methacrylate
TEGDMA – Triethyleneglycol dimethacrylate
TMDI – 2,2,4-trimethyl hexamethylene diisocyanate
TMDI-T2 – 2,2,4-trimethyl hexamethylene diisocyanate having 2 acrylate groups
TMDI-T4 – 2,2,4-trimethyl hexamethylene diisocyanate having 4 acrylate groups
IBOA – isobornyl acrylate
$CaCO_3$ – calcium carbonate.

The following examples are offered to aid in understanding the present invention. All amounts are in parts by weight unless indicated otherwise.

EXAMPLE 1

This example demonstrates how the superior surface hardness of the resins or copolymers used to prepare binders of this invention compares with that property of resins used to prepare binders of the prior art.

In each sample, the binder was prepared by introducing the ingredients into a vessel equipped with a mechanical stirrer and stirring the ingredients until the mixture was homogeneous. The radiation-curable binder compositions were knife coated onto a polyethylene terephthalate (PET) film at a 0.102 mm (4 mm wet thickness and then irradiated at 200 Kev with a dose of 5 Mrad in a nitrogen atmosphere with a Model 250 Electrocurtain® electron beam from Energy Science, Inc., Woburn, MA. The phenolic control samples were prepared by casting the phenolic compositions in a glass tray, followed by a 90 minute cure at 90°C and a subsequent 12 hour cure at 100°C.

The samples prepared as described above were measured for hardness by the Barcol method (ASTM D-2583-75). The method involves applying a force to a needle point, observing the penetration weight, and recording said weight as a percent of the weight required to penetrate glass. The results are shown in Table I, wherein samples 1 and 2 describe binders of the present invention and samples 3 through 8, inclusive, describe binders of the prior art. Samples 3-5 were thermally cured, and samples 6-8 were cured by radiation.

TABLE I

| Sample | Monomer A | Amount | Monomer B | Amount | Monomer C | Amount | Monomer D | Amount | Filler | Amount | Barcol hardness (%) |
|---|---|---|---|---|---|---|---|---|---|---|---|
| 1 | TMPTA | 50 | TATHEIC | 50 | – | – | – | – | – | – | 65–70 |
| 2 | TMPTA | 25 | TATHEIC | 25 | – | – | – | – | $CaCO_3$ | 50 | 60–65 |
| 3 | Phenolic | 100 | – | – | – | – | – | – | – | – | 40–45 |
| 4 | Phenolic | 100 | – | – | – | – | – | – | – | – | 45–50 |
| 5 | Phenolic | 50 | – | – | – | – | – | – | $CaCO_3$ | 50 | 50–55 |
| 6 | Acrylatedepoxy[1] | 30 | IBOA | 9 | NVP | 9 | TMPTA | 6 | $CaCO_3$ | 46 | 35–40 |
| 7 | Acrylatedepoxy[1] | 30 | IBOA | 9 | NVP | 0 | TMPTA | 6 | – | – | 35–40 |
| 8 | Acrylatedurethane[2] | 40 | NVP | 40 | TMPTA | 20 | – | – | – | – | 45–50 |

[1] Diacrylate ester of a bisphenol A type epoxy resin (Celrad® 3600, Celanese Chemical Co.)
[2] Uvithane® 893, Thiokol Corporation.

The filled and unfilled TMPTA/TATHEIC resin systems display hardness exceeding that of any of the other radiation-cured resins or of the thermally cured phenolic resins.

EXAMPLE 2

This example compares thermal stability of the radiation cured resinous binders of this invention with the thermally cured phenolic binders of the prior art. Thermal stability was measured by loss of weight, in percent, as a function of temperature.

Samples were prepared according to the procedure described in Example 1. The samples were removed from the PET film and glass tray and were analyzed by thermal gravimetric analysis (TGA). The TGA measurements were conducted in an air atmosphere at a flow rate of 100 cc/minute to a maximum temperature of 450°C on a Perkin-Elmer Model TGS-2 thermal analyzer. The starting temperature of 20°C was increased at a rate of 20°C/min. The results are shown in Table II, wherein samples 9 through 11, inclusive, describe the cured binder of the present invention, and samples 12 through 16, inclusive, describe binders of the prior art. Samples 12-14 were thermally cured and Samples 15-16 were cured by radiation.

TABLE II

| Sample | First monomer | Amount | Second monomer | Amount | Filler | Amount | Weight Loss (%) 100°C | 200°C | 300°C | 400°C | 450°C |
|---|---|---|---|---|---|---|---|---|---|---|---|
| 9 | TMPTA | 50 | TATHEIC | 50 | None | – | 0.5 | 0.5 | 1.0 | 9.0 | 38 |
| 10 | TMPTA | 25 | TATHEIC | 25 | $CaCO_3$ | 50 | 0 | 0 | 0.5 | 3.5 | 45 |
| 11 | TMPTA | 25 | TATHEIC | 25 | Quartz | 50 | 0 | 0.5 | 1.0 | 3.5 | 17 |
| 12 | Phenolic | 100 | None | – | None | – | 1 | 4.8 | 10 | 18.4 | 47 |
| 13 | Phenolic | 100 | None | – | None | – | 2.75 | 6 | 8.5 | 17.5 | 40 |
| 14 | Phenolic | 50 | None | – | $CaCO_3$ | 50 | 1 | 3.5 | 5.5 | 19.5 | 43 |
| 15 | Acrylatedurethane[1] | 100 | None | – | None | – | 0 | 0 | 5.5 | 70 | 89 |
| 16 | Acrylatedepoxy[2] | 100 | None | – | None | – | 0.5 | 1 | 5 | 33.5 | 84 |

[1] Uvithane® 893, Thiokol Corporation.
[2] Diacrylate ester of a bisphenol A type epoxy resin (Celrad® 3600, Celanese Chemical Co.)

The filled and unfilled TMPTA/TATHEIC resin systems of the present invention have thermal stability equivalent to or superior to the other resin systems.

EXAMPLE 3

This example demonstrates grinding performance results of the coated abrasives of this invention.

A radiation curable resinous binder composition was prepared by mixing 50 g of TMPTA with 50 g of TATHEIC. Then 100 g of quartz (Imsil® A-10) was blended with the resinous mixture until a homogeneous mix was obtained. The same composition was used for the make coat and size coat. The make coat composition was applied to a 76.2 mm x 3.35 mm (3 in. by 132 in.) standard single cotton belt abrasive backing using a knife coater to give a uniform make coat. Abrasive mineral (grade 50 aluminum oxide) was then applied over the make coat of the belts via electrostatic coating to give uniform surface coverage. An electrostatic coater useful for this step is manufactured by Peter Swabe Co., West Germany. The abrasive loaded coating was passed through a 250 Kev Electrocurtain® electron beam (Energy Sciences, Inc.) operating at 1–10 Mrad of radiation as indicated in Table III. The line speed and current were controlled to give uniform dose.

The size coat was applied over the layer of abrasive mineral using a roll coater. Curing was completed under the same conditions as were used to cure the make coat. Several combinations of make coat and size coat were prepared according to this procedure. The samples thus prepared are summarized in Table III.

TABLE III

| Sample | Backing | Weight (g) | | | Radiation dosage (Mrad) | |
|---|---|---|---|---|---|---|
| | | Make coat | Mineral | Size coat | Make coat[1] | Size coat[2] |
| 17 | Cotton (Y weight) | 41 | 154 | 92 | 5 | 10 |
| 18 | Cotton (Y weight) | 50 | 166 | 76 | 10 | 10 |
| 19 | Cotton (X weight) | 46 | 146 | 96 | 5 | 10 |
| 20 | Cotton (X weight) | 50 | 157 | 138 | 10 | 10 |

[1] Make coat was irradiated on the top as well as through the backing of the belt.
[2] Size coat was irradiated on the top only.

The samples were tested on a single belt robot grinder manufactured by Divine Brothers & Co., Inc., Utica, New York. Each 76.2 mm x 3.35 mm (3 inch by 132 inch) belt was mounted upon a 55A durometer 356 mm (14 inch) diameter contact wheel which was driven at 595 $m^2$ (6400 square feet) per minute (SFPM) while a 25.4 mm x 254 mm (1 inch by 10 inch) reciprocating mild steel work piece (1018) was positioned parallel to the axis of the contact wheel. The work piece was forced against the belt using a constant load of 111N (25 lbs). As used in this example and in those following, "initial cut wt." means weight of work piece ground away in the first minute of grinding, and "total cut wt." means weight of work piece ground away during the indicated grinding time. The results are shown in Table IV.

TABLE IV

| Sample | Initial cut wt. [1] (g) | Total cut wt. [2] (g) | Time (min) |
|---|---|---|---|
| 17 | 80 | 939 | 16.5 |
| 18 | 71 | 1039 | 21.5 |
| 19 | 88 | 1219 | 28 |
| 20 | 89 | 1294 | 28 |

[1] Weight of metal ground during first minute of grinding.
[2] Weight of metal ground for time indicated.
[3] Samles were ground using constant load of 111N (25 pounds).

The resinous binders of the present invention performed successfully as radiation-cured coated abrasive binders.

Example 4

This example, like Example 3, demonstrates grinding performance results of the coated abrasive of this invention, the major difference being that 220 grade abrasive mineral was used.

A radiation curable resinous binder composition was prepared by mixing 50 g of TMPTA with 50 g of TATHEIC until a homogenous mix was obtained. The same composition was used for the make coat and size coat. The make coat composition was applied to a 76.2 mm × 3.35 m (3 in. by 132 in.) standard single cotton belt abrasive backing using a knife coater to give a uniform make coat. The weight of the make coat was 10 g. Abrasive mineral (grade 220 aluminum oxide) was then applied over the make coat of the belts via electrostatic coating to give uniform surface coverage. The weight of the abrasive mineral was 61 g. The abrasive loaded coating was passed through a 250 Kev Electrocurtain® electron beam (Energy Sciences, Inc.) operating at 10 Mrad of radiation as indicated in Table III. The line speed and current were controlled to give uniform dose.

The sample, which was designated Sample 21, was coated by means of a two-roll coater with a size coat of an amount just sufficient to cover the abrasive mineral. Curing was completed using electron beam radiation (10 Mrad).

The sample was tested as in Example 3, the only difference being that the load of the work piece against the belt was 44.5N (10 lbs). The initial cut weight (1 min) was 25 g; the total cut weight (20 min) was 279 g. A control employing phenolic resin had an initial cut weight of 12 g and a total cut weight of 212 g. The coated abrasives of the present invention was superior in grinding performance to a coated abrasive employing a phenolic binder.

Example 5

This example demonstrates that an optional thermal cure can be used to insure cure of any resinous material not exposed to radiation on account of shielding by abrasive granules.

A thermal catalyst was added to the make coat composition to insure complete cure of any resinous material shaded by the abrasive mineral. The desired amount of catalyst was dissolved in an aliquot of solvent. The ratio of monomers, filler, and catalyst as shown in Table V were mixed until a homogeneous mixture was obtained.

TABLE V

| Sample | Monomer A | Amount | Monomer B | Amount | Filler | Amount |
|---|---|---|---|---|---|---|
| 22[1] | TMPTA | 50 | TATHEIC | 50 | Quartz | 100 |
| 23[1] | TMPTA | 50 | TATHEIC | 50 | Quartz | 100 |

[1] Benzoyl peroxide catalyst was used in Samples 22 and 23 at a level of 0.05 parts by weight.

The mixture, i.e. the make coat, was applied to the backing, X weight cotton in each case, by a knife coater. The abrasive mineral, aluminum oxide, was then electrostatically coated over the make coat to give a uniform surface coating. The resulting coat was then irradiated by passing under a 250 Kev electrocurtain electron-beam operating so as to give the desired dose of radiation. The samples were then thermally post cured in a forced air oven at 100°C for 4 hours.

After the thermal post-cure the samples were coated by means of a two-roll coater with a size coat of an amount just sufficient to cover the abrasive mineral. The size coat of each sample was the same composition as that used for the make coat. Curing was completed using only electron-beam irradiation. Table VI shows coat weight and cure conditions for the abrasive samples.

TABLE VI

| Sample | Make coat wt (g) | Mineral wt (g) | Mineral grade | Dose make coat (Mrad) | Thermal cure (hrs) | Dose size coat (Mrad) |
|---|---|---|---|---|---|---|
| 22 | 47 | 139 | 50(AY) | 2 | 4 | 10 |
| 23 | 48.5 | 139.5 | 50(AY) | 2 | 4 | 10 |

The samples were tested on a single belt robot-grinder of Example 3. The test procedure was the same as that used in Example 3.

The results of the robot grinding test are shown in Table VII. The controls were standard 3M® phenolic RBC-GG abrasive belts manufactured by the Minnesota Mining and Manufacturing Company.

TABLE VII

| Sample | Initial cut wt (g) | Total cut wt (g) | Time (min) |
|---|---|---|---|
| 22 | 95 | 1466 | 30 |
| 23 | 94 | 1577 | 30 |
| Control[1] | 90 | 1432 | 30 |

[1] Grade 50 (AY) aluminum oxide, phenolic resin binder.

The combination of a thermal cure with a radiation cure ensures that the acrylate monomers will be polymerized and fully cured, even though they may be in a grit shadow during radiation exposure. Without a complete cure, the individual abrasive particles may be lost during grinding, thereby reducing the cutting performance.

Example 6

This example demonstrates continuous coating techniques which are similar to actual manufacturing procedures for a radiation curable binder. The make and size resin coating compositions were prepared by methods described in Example 3, except that calcium carbonate was also used as a filler. A thermal catalyst was included in the composition as previously described in Example 5. Table VIII shows the ingredients and amounts thereof used for the make and size coat compositions. A pilot plant continuous coating line was set up to operate at 0.127 $ms^{-1}$ (25 feet per minute) web speed. The backing to be coated was treated in a continuous manner by knife coating the make coat, electrostatically coating the abrasive mineral, and then irradiation with an electron beam in an air atmosphere. The semi-finished web was given a thermal cure. Continuous treatment continued with roll coating a resin size coat on to the mineral side of the web and then irradiating with an electron beam in a nitrogen atmosphere.

TABLE VIII

| Coating Composition | Monomer A | Amount | Monomer B | Amount | Monomer C | Amount | Filler | Amount |
|---|---|---|---|---|---|---|---|---|
| A[3] | TMPTA | 25 | TATHEIC | 25 | – | – | Quartz | 50 |
| B[3] | TMPTA | 25 | TATHEIC | 25 | – | – | $CaCO_3$ | 50 |
| C | Acrylatedepoxy[1] | 30 | NVP | 10 | TMPTA | 10 | $CaCO_3$ | 50 |
| D | Acrylatedepoxy[2] | 30 | NVP | 10 | TMPTA | 10 | $CaCO_3$ | 50 |

[1] Celrad® 3600, Celanese Chemical Co.
[2] Celrad® 3500, Celanese Chemical Co.
[3] Compositions A and B also contained 0.02 parts by weight benzoyl peroxide catalyst.

Table IX shows which composition was used for the make coat and which was used for the size coat in each sample.

TABLE IX

| Sample | Mineral | Grade | Make resin | Size resin |
|---|---|---|---|---|
| 24 | $Al_2O_3$ | 50 (AY) | A | same as make |
| 25 | $Al_2O_3$ | 50 (AY) | B | same as make |
| 26 | $Al_2O_3$ | 80 (AY) | B | same as make |
| 27 | $Al_2O_3$ | 80 (AY) | C | D |
| 28 | $Al_2O_3$ | 100 (AY) | B | same as make |
| 29 | $Al_2O_3$ | 100 (AY) | B | same as make |

The make resin was knife coated onto the backing, X weight cotton in each case, at a 4 mil wet thickness. The abrasive mineral was then electro-statically coated over the make coat to give the desired coating weight for a given grade of mineral as shown in Table X. The make coat was irradiated at 225 Kev with a dose of 3 Mrad under ambient air. Samples 24–26 and 28–29 received thermal cure in an oven at 100°C for 8 hours before being size coated.

The size coat was applied with a roll coater at a coating weight in accordance with Table X.

TABLE X

| Mineral grade | Mineral weight (g/sq. in.) | Size coat wt. (g/sq. in.) |
|---|---|---|
| 50 | 0.4 | 0.14 |
| 80 | 0.24 | 0.097 |
| 100 | 0.19 | 0.064 |

The size coat was cured at 225 Kev with a dose of 3 Mrad under a nitrogen blanket.

Performance testing was conducted with a robot grinder according to test conditions previously described in Example 3, with the exceptions that the load for grade 80 mineral was 66.7N (15 lbs.), and the load for grade 100 mineral was 66.7N (15 lbs). The results are shown in Table XI.

TABLE XI

| Sample | Initial cut wt. (g) | Total cut wt. (g) | Time (min) | % Control |
|---|---|---|---|---|
| 24 | 80 | 1,248 | 30 | 92 |
| 25 | 82 | 1,341 | 30 | 99 |
| Control[1] (phenolic) | 70 | 1,361 | 30 | 100 |
| 26 | 41 | 843 | 30 | 100 |
| 27 | 38 | 628 | 30 | 75 |
| Control[2] (phenolic) | 40 | 843 | 30 | 100 |
| 28 | 33 | 590 | 30 | 116 |
| 29 | 35 | 659 | 30 | 130 |
| Control[3] (phenolic) | 30 | 507 | 30 | 100 |

[1] Grade 50 (AY) $Al_2O_3$ on 3M® RBC-GG abrasive belt having phenolic binder.
[2] Grade 80 (AY) $Al_2O_3$ on 3M® RBC-GG abrasive belt having phenolic binder.
[3] Grade 100 (AY) $Al_2O_3$ on 3M® RBC-GG abrasive belt having phenolic binder.

The abrasive sheets of this invention exhibited grinding properties equivalent or superior to those of the phenolic controls and the prior art (sample 27).

Example 7

This example demonstrates additional novel binder resin formulations. The radiation curable resinous compositions were prepared by mixing the monomers and fillers as shown in Table XII. A thermal catalyst

was included in two of the resinous compositions. The make resin composition was coated onto the backing, X weight cotton in each case, by meas of a knife coater to a 0.102 mm (4 mil) wet thickness. The abrasive mineral, $Al_2O_3$ (grade 100 (AY) in each case), was applied over the make coat by means of electrostatic coating. The mineral coated resin was electron beam cured at 240 Kev with a dose of 3 Mrad in air. This was followed by application by roll coater of size resin composition 99.2 gm$^{-2}$ (0.064 g/sq. in.) and cure thereof at 240 Kev with a dose of 3 Mrad. Samples 30 and 32 each received a thermal post cure at 100°C for 4 hours.

TABLE XII

| Sample | Monomer A | Amount | Monomer A | Amount | Filler | Amount |
|---|---|---|---|---|---|---|
| 30[1] | HMDI-T7 | 25 | TMPTA | 25 | $CaCO_3$ | 50 |
| 31 | HMDI-T7 | 25 | TMPTA | 25 | $CaCO_3$ | 50 |
| 32[1] | HMDI-T9 | 25 | TMPTA | 25 | $CaCO_3$ | 50 |
| 33 | HMDI-T9 | 25 | TMPTA | 25 | $CaCO_3$ | 50 |

[1] Benzoyl peroxide catalyst was used in Samples 30 and 32 at a level of 0.02 parts by weight.

The robot grinder was employed to measure performance of these samples as in Example 3 with a constant load of 66.7N (15 lbs). The performance results are shown in Table XIII

TABLE XIII

| Sample | Thermal post cure | Initial cut wt (g) | Total cut wt (g) | Time (min) |
|---|---|---|---|---|
| Control[1] (phenolic) | | 35 | 585 | 30 |
| 30 | Yes | 36 | 681 | 30 |
| 31 | No | 30 | 640 | 30 |
| 32 | Yes | 39 | 644 | 30 |
| 33 | No | 31 | 647 | 30 |

[1] Grade 100(AY) $Al_2O_3$ on 3M® RBC-GG abrasive belt having phenolic binder.

The abrasive sheet of this invention exhibited grinding properties equivalent to or superior to those of the phenolic control.

Example 8

This example demonstrates the performance of the coated abrasive on fiber discs. The radiation curable coating composition was prepared according to the conditions composition B of Example 6. The make coat composition was applied by paint brush to a 0.762 mm (30 mil) vulcanized rag pulp fiber disc (e.g. a 3M® type C disc.) having a diameter of 178 mm (7 inches). The total weight of the make coat was 4 g. The abrasive mineral, 15 g Grade 50 Cubitron® abrasive (see U.S. Patent 4 314 827) was applied over the make coat by electrostatic coating. The coated sample was irradiated with electron beam at 250 Kev with a 5 Mrad dose in air.

The size coat composition was applied over the abrasive coat with a paint brush at a weight of 9 g. The size coat was cured with electron beam at 250 Kev with a 5 Mrad dose in nitrogen. A subsequent thermal post cure (8 hours at 100°C) was then conducted. Performance testing was conducted by a 3M® standard disc sanding test which consisted of an edge and flat test. The edge test involved placing the work piece in proximity to the outer periphery of the disc at the prescribed angle at the prescribed load for the prescribed time. The flat test involved placing the work piece at a distance of about 25.4 mm (1 inch) inward from the outer periphery of the disc at the prescribed angle at the prescribed load for the prescribed time. The edge test was conducted at an angle of 18° under a constant load (2896 g) for 8 minutes while the flat was conducted at an angle of 7° under a constant load (2670 g) for 8 minutes. The work piece was mild steel. The results are shown in Table XIV.

TABLE XIV

| Sample | Total cut wt. (g) | |
|---|---|---|
| | Edge | Flat |
| Control[1] | 48 | 61 |
| 34 | 66 | 65 |
| 35 | 68 | 59 |

[1] 3M® type C disk having a phenolic binder.

The abrasive sheets of this invention exhibited grinding performance equivalent to or superior to those of the phenolic control.

Example 9

This example demonstrates abrasive construction usable under wet conditions made from a radiation curable resinous binder. The radiation curable resin used for the make and size coating compositions was prepared by stirring the ingredients with a mechanical mixer. The ingredients and amounts thereof are shown in Table XV.

TABLE XV

| Sample | Backing | Make Resin | Size Resin |
|---|---|---|---|
| 36 | A wt paper | 70% HMDI-T7, 30% N-BUMA | 70% TMDI-T2, 30% TMPTA |
| 37 | A wt paper | 70% HMDI-T7, 30% N-BUMA | 70% TMDI-T2, 30% TMPTA |
| 38 | A wt paper | 70% HMDI-T7, 30% N-BUMA | 70% TMDI-T4, 30% TEGDMA |
| 39 | A wt paper | 70% HMDI-T7, 30% N-BUMA | 70% TMDI-T4, 30% TEGDMA |
| 40 | A wt paper | 70% TMDI-T2, 30% TMPTD | 70% TMDI-T2, 30% TMPTA |
| 41 | 1.3 mil PET | 70% HMDI-T7, 30% N-BUMA | 70% TMDI-T2, 30% TMPTA |

The make coat composition was applied by a knife coater to give a coating thickness of 0.0254 mm (1 mil). Abrasive mineral, SiC, 220 grade, was applied over the make coat by electrostatic coating at a coating density of 126 $gm^{-2}$ (0.081 g/sq. in). The coat was cured by irradiating with electron beam at 235 Kev with a 3 Mrad dose in air environment.

The size coat composition was applied by means of a roll coater to give a coating weight of 45.0 $gm^{-2}$ (0.029 g/sq. in). The coat was cured by irradiating with electron beam at 200 Kev with a 3 Mrad dose in a nitrogen environment.

The samples were tested using a modified Schieffer disc tester. 102 mm (four inch) diameter discs were die cut a and installed in a testing machine for evaluation of abrasiveness. The testing machine consisted of a mechanically driven 102 mm (4 inch) diameter rotating steel backing plate upon which the abrasive coated samples were applied. The rotating abrasive samples were forced with a constant load of 44.5N (10 pounds) against a stationary surface of a polymethylmethacrylate (PMMA) disc. The test consisted of a 500 revolution cycle per test with a continuous wetting of the PMMA disc. Reported results set fourth in Table XVI consist of an average of four runs for each sample tested.

TABLE XVI

| Sample | Average cut wt. (g) | % Control |
|---|---|---|
| Control[1] | 2.02 | 100 |
| 36 | 1.83 | 91 |
| 37 | 1.95 | 97 |
| 38 | 1.88 | 93 |
| 39 | 1.88 | 93 |
| 40 | 1.89 | 94 |
| 41 | 1.87 | 93 |

[1] 3M® grade 220 WET or DRY® Tri-M-ite® paper A wt. W2.

Example 10

This example compares the binder formulation of the present invention with that of binders described in the prior art. The make coat composition in each sample was knife coated onto the backing at a 0.102 mm (4 mil) wet thickness. The coating compositions in shown in Table XVII.

TABLE XVII

| Sample | Monomer A | Amount | Monomer B | Amount | Monomer C | Amount | Monomer D | Amount | Filler | Amount |
|---|---|---|---|---|---|---|---|---|---|---|
| 42 | Acrylated epoxy | 35 | NVP | 8 | IBOA | 10 | AA | 2 | $CaCO_3$ | 24 |
| 43 | Acrylated urethane | 20 | NVP | 20 | TMPTA | 10 | – | – | $CaCO_3$ | 50 |
| 44 | TMPTA | 25 | TATHEIC | 25 | – | – | – | – | $CaCO_3$ | 50 |
| 45 | HMDI-T7 | 25 | TMPTA | 25 | – | – | – | – | $CaCO_3$ | 50 |

In each sample the backing was X weight cotton and the abrasive mineral was grade 100 (AY) aluminum oxide. The abrasive mineral was applied by electrostatic coating at a weight of 295 $gm^{-2}$ (0.19 g/sq. in). The samples were irradiated at 240 Kev with 5 Mrad in air with the abrasive mineral side up.

The size coat composition in each sample was applied with a roll coater at a coating weight of 99.2 $gm^{-2}$ (0.064 g/sq. in). The samples were cured by irradiation with electron beam at 240 Kev with a dose of 5 Mrad in a nitrogen environment. Size coat compositions for sample 42 contained 31 parts Celrad® 3600 acrylate epoxy, 9 parts IBOA, 6 parts TMPTA, 9 parts NVP, and 25 parts $CaCO_3$. The size coat compositions for samples 43, 44, and 45 were the same as those of the make coat compositions of these samples, as shown in Table XVII.

After the size coat had been cured, the samples were irradiated through the back side at 240 Kev with a 5 Mrad dose. Performance testing was done on single belt robot grinder as previously described in Example 3 with a load of 66.7N (15 lbs). The results of the performance test are shown in Table XVIII.

TABLE XVIII

| Sample | Initial cut wt. (g) | Total cut wt. (g) | Time (min) |
|---|---|---|---|
| 42 | 39 | 513 | 30 |
| 43 | 36 | 580 | 30 |
| 44 | 35 | 659 | 30 |
| 45 | 36 | 681 | 30 |

Samples 44 and 45, the samples of the present invention, exhibit grinding properties superior to those of the prior art (samples 42 and 43).

## Claims

1. A coated abrasive product comprising abrasive granules which are supported on and adherently bonded to at least one major surface of a backing sheet by a make coat of a first resinous binder material and a size coat of a second resinous binder material, at least one of said first resinous binder material or said second resinous binder material comprising a copolymer formed from a mixture comprising (1) at least one monomer selected from the group consisting of isocyanurate derivatives having at least one terminal or pendant acrylate group and isocyanate derivatives having at least one terminal or pendant acrylate group, and (2) at least one aliphatic or cycloaliphatic acrylic or methacrylic acid ester monomer having at least one terminal or pendant acrylate group.

2. An abrasive product according to claim 1 wherein the ratio of isocyanurate or isocyanate derivative monomer to the aliphatic or cycloaliphatic monomer having at least one terminal or pendant acrylate group ranges from about 1:3 to 3:1.

3. An abrasive product of claim 2 wherein the ratio of isocyanurate or isocyanate derivative monomer to the aliphatic or cycloaliphatic monomer having at least one terminal or pendant acrylate group ranges from about 1:1.5 to about 1.5:1.

4. An abrasive product according to any preceding claim wherein said isocyanurate derivative monomer is represented by the formula:

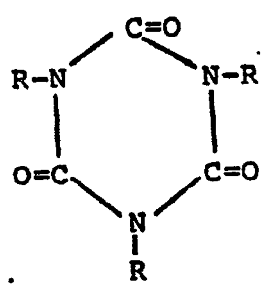

where each R can be the same or different and represents a group containing at least one terminal or pendant acrylate or methacrylate group.

5. An abrasive product according to claim 4 where R is selected from the group consisting of

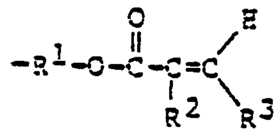

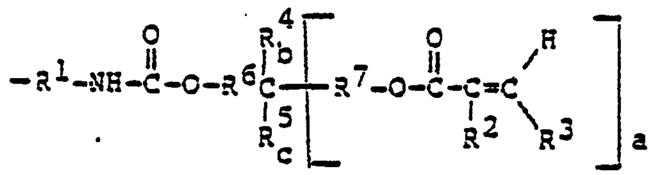

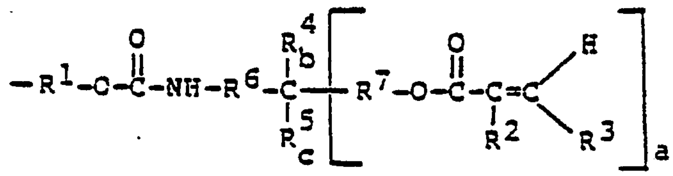

$R^1$ represents a divalent alkylene group,
$R^2$ represents –H or –$CH_3$,
$R^3$ represents –H or –$CH_3$,
$R^4$ represents –H, an alkyl group, or an arylalkyl group,
$R^5$ represents –H, an alkyl group, or an arylalkyl group,
$R^6$ represents a divalent alkylene group,
$R^7$ represents a covalent bond or a divalent alkylene group,
a represents an integer from 1 to 3, inclusive,
b represents 0 or 1,
c represents 0 or 1, and
$a + b + c = 3$.

6. An abrasive product according to any of claims 1 to 3 wherein said isocyanate derivative monomer is represented by the formula:

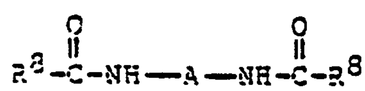

where A represents a divalent alkylene group,
each $R^8$ can be the same or different and represents

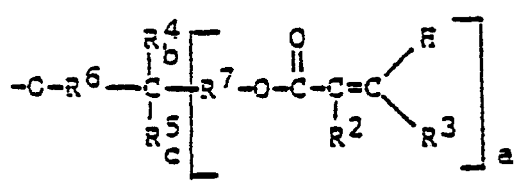

$R^2$ represents –H or –$CH_3$,
$R^3$ represents –H or –$CH_3$,
$R^4$ represents –H, an alkyl group, or an arylalkyl group,
$R^5$ represents –H, an alkyl group, or an arylalkyl group,
$R^6$ represents a divalent alkylene group,
$R^7$ represents a covalent bond or a divalent alkylene group,
a represents an integer from 1 to 3, inclusive,
b represents 0 or 1,
c represents 0 or 1, and
$a + b + c = 3$.

7. An abrasive product according to any preceding claim wherein said aliphatic or cycloaliphatic monomer having at least one acrylic group is represented by the formula:

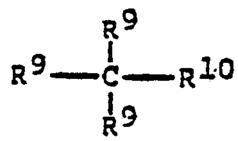

where
each $R^9$ can be the same or different, and
$R^9$ represents –H or

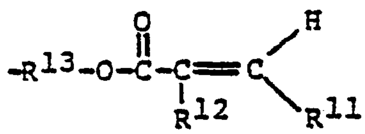,

$R^{10}$ represents an alkyl group,
$R^{11}$ represents –H or $-CH_3$,
$R^{12}$ represents –H or $-CH_3$, and
$R^{13}$ represents a covalent bond or a divalent alkylene group, at least one of said $R^9$ not being –H.

8. An abrasive product according to any preceding claim wherein said abrasive granules are selected from the group consisting of flint, garnet, aluminum oxide, alumina:zirconia, diamond, and silicon carbide.

9. An abrasive product according to any preceding claim wherein said first resinous binder is said copolymer and said second resinous binder is selected from the group consisting of glue, varnish, epoxy resin, phenolic resin and polyurethane.

10. An abrasive product according to any of claims 1 to 8 wherein said first resinous binder is selected from the group consisting of glue, varnish, epoxy resin, phenolic resin and polyurethane and said second resinous binder is said copolymer.

11. An abrasive product according to any preceding claim wherein said backing sheet is formed of paper, polymeric film, vulcanised fiber, or cloth.

12. An abrasive product according to any preceding claim wherein said mixture further comprises a thermal curing catalyst.

13. A method of preparing a coated abrasive product according to claim 1 comprising the steps of:
(1) providing a backing sheet,
(2) applying said make coat to said backing sheet,
(3) applying abrasive granules over said make coat,
(4) at least partially curing said make coat,
(5) applying said size coat over said make coat and said abrasive granules, and
(6) completely curing said make and said size coat,
wherein at least one of said curing steps is conducted by means of electromagnetic radiation.

14. A method according to claim 13 wherein said electromagnetic radiation is ultraviolet radiation.

15. A method according to claim 13 wherein said electromagnetic radiation is ionizing radiation.

16. A method according to claim 15 wherein said ionizing radiation is electron beam radiation.

17. A method according to any of claims 13 to 16 further including the step of post-curing said cured coated abrasive product by means of thermal energy.

18. A coated abrasive product comprising abrasive granules which are supported on and adherently bonded to at least one major surface of a backing sheet by a resinous binder material, said resinous binder material comprising a copolymer formed from a mixture comprising (1) at least one monomer selected from the group consisting of isocyanurate derivatives having at least one terminal or pendant acrylate group and isocyanate derivatives having at least one terminal or pendant acrylate group, and (2) at least one aliphatic or cycloaliphatic acrylic or methacrylic acid ester monomer having at least one terminal or pendant acrylate group.

**Patentansprüche**

1. Überzogenes Schleifmittelprodukt mit Schleifmittelteilchen, die eine Grundschicht aus einem ersten harzartigen Bindemittel und einer Einbettungsschicht aus einem zweiten harzartigen Bindemittel auf mindestens einer Breitseite eines Tragblattes abgestützt und stoffschlüssig mit ihm verbunden sind, wobei das erste und/oder das zweite harzartige Bindemittel mindestens teilweise aus einem Copolymer besteht, das aus einem Gemisch hergestellt ist, das (1) mindestens ein Monomer enthält, das aus der Gruppe ausgewählt ist, die aus Isocyanuratderivaten mit mindestens einer endständigen oder angehängten Acrylatgruppe und Isocyanatderivaten mit mindestens einer endständigen oder angehängten Acrylatgruppe besteht, und (2) mindestens ein aliphatisches oder alizyklisches Acryl- oder Methacrylsäureestermonomer mit mindestens einer endständigen oder angehängten Acrylatgruppe enthält.

2. Schleifmittelprodukt nach Anspruch 1, dadurch gekennzeichnet, daß das Verhältnis von Isocyanurat- oder Isocyanatderivatmonomer zu dem aliphatischen oder alizyklischen Monomer mit mindestens einer endständigen oder angehängten Acrylatgruppe im Bereich von etwa 1:3 bis 3:1 liegt.

3. Schleifmittelprodukt nach Anspruch 2, dadurch gekennzeichnet, daß das Verhältnis von Isocyanurat- oder Isocyanatderivatmonomer zu dem aliphatischen oder alizyklischen Monomer mit mindestens einer enständigen oder angehängten Acrylatgruppe im Bereich von etwa 1:1,5 bis etwa 1,5:1 liegt.

4. Schleifmittelprodukt nach einem der vorhergehenden Ansprüche, dadurch gekennzeichnet, daß das Isocyanuratderivatmonomer durch die Formel

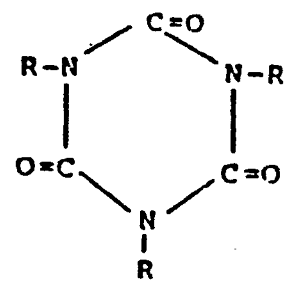

dargestellt ist, in der jedes R gleich oder verschieden sein kann und eine Gruppe darstellt, die mindestens eine enständige oder angehängte Acrylat- oder Methacrylatgruppe enthält.

5. Schleifmittelprodukt nach Anspruch 4, dadurch gekennzeichnet, daß R aus der Gruppe ausgewählt ist, die aus

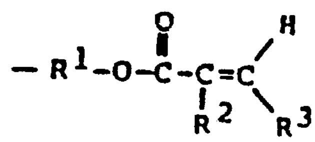

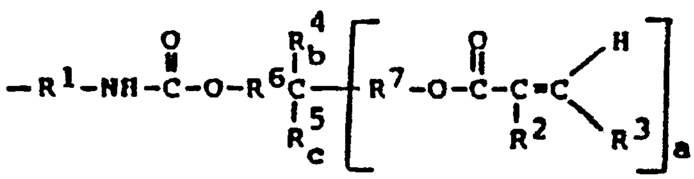

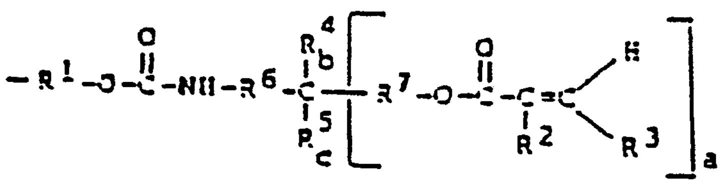

besteht, wobei
$R^1$ eine zweiwertige Alkylengruppe,
$R^2$ –H oder $-CH_3$,
$R^3$ –H oder $-CH_3$,
$R^4$ –H, eine Alkylgruppe oder eine Arylalkylgruppe,
$R^5$ –H, eine Alkylgruppe oder eine Arylalkylgruppe,
$R^6$ eine zweiwertige Alkylengruppe,
$R^7$ eine kovalente Bindung oder eine zweiwertige Alkylengruppe darstellt,
a eine ganze Zahl von einschließlich 1 bis 3,
b 0 oder 1,
c 0 oder 1 und
$a + b + c = 3$ ist.

6. Schleifmittelprodukt nach einem der Ansprüche 1 bis 3, dadurch gekennzeichnet, daß das Isocyanuratderivatmonomer durch die Formel

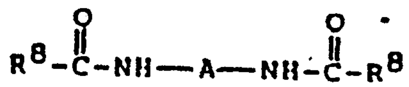

dargestellt ist, die der A eine zweiwertige Alkylengruppe darstellt, alle $R^8$ gleich oder verschieden sein können und jeweils

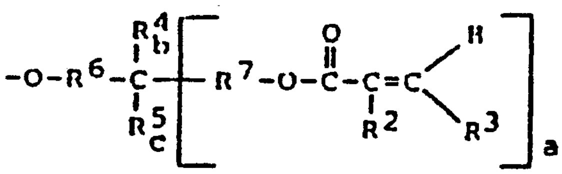

darstellen,
$R^2$ –H oder $-CH_3$,
$R^3$ –H oder $-CH_3$,
$R^4$ –H, eine Alkylgruppe oder eine Arylalkylgruppe,
$R^5$ –H, eine Alkylgruppe oder eine Arylalkylgruppe,
$R^6$ eine zweiwertige Alkylengruppe,
$R^7$ eine kovalente Bindung oder eine zweiwertige Alkylengruppe darstellt,
a eine ganze Zahl von einschließlich 1 bis 3,
b 0 oder 1,
c 0 oder 1 und
$a + b + c = 3$ ist.

7. Schleifmittelprodukt nach einem der vorhergehenden Ansprüche, dadurch gekennzeichnet, daß das aliphatische oder alizyklische Monomer mit mindestens einer Acrylsäuregruppe durch die Formel

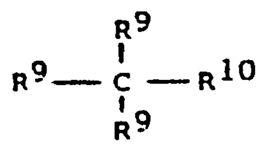

dargestellt ist, in der
alle $R^9$ gleich oder verschieden sein können und
$R^9$ –H oder

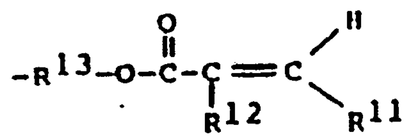

$R^{10}$ eine Alkylgruppe,
$R^{11}$ –H oder $CH_3$,
$R^{12}$ –H oder $-CH_3$ und
$R^{13}$ eine kovalente Bindung oder eine zweiwertige Alkylengruppe darstellt, wobei mindestens ein $R^9$ nicht –H ist.

8. Schleifmittelprodukt nach einem der vorhergehenden Ansprüche, dadurch gekennzeichnet, daß die Schleifmittelkörner aus der Gruppe ausgewählt sind, die aus Flint, Granat, Aluminiumoxid, Aluminiumoxid:Zirkoniumdioxid, Diamant und Siliciumcarbid besteht.

9. Schleifmittelprodukt nach einem der vorhergehenden Ansprüche, dadurch gekennzeichnet, daß das erste harzartige Bindemittel das genannte Copolymer ist und daß das zweite harzartige Bindemittel aus der Gruppe ausgewählt ist, die aus Leim, Lack, Epoxidharz, Phenolharz und Polyurethan besteht.

10. Schleifmittelprodukt nach einem der Ansprüche 1 bis 8, dadurch gekennzeichnet, daß das erste harzartige Bindemittel aus der Gruppe ausgewählt ist, die aus Leim, Lack, Epoxidharz, Phenolharz und Polyurethan besteht, und daß das zweite harzartige Bindemittel das genannte Copolymer ist.

11. Schleifmittelprodukt nach einem der vorhergehenden Ansprüche, dadurch gekennzeichnet, daß das Tragblatt aus Papier, Polymerfolie, Vulkanfiber oder Textilstoff besteht.

12. Schleifmittelprodukt nach einem der vorhergehenden Ansprüche, dadurch gekennzeichnet, daß das Gemisch ferner einen Warmhärtekatalysator enthält.

13. Verfahren zum Herstellen eines überzogenen Schleifmittelprodukts nach Anspruch 1 mit folgenden Schritten:
(1) es wird ein Tragblatt verwendet,
(2) auf das Tragblatt wird die Grundschicht aufgetragen,
(3) auf die Grundschicht werden Schleifmittelkörner aufgetragen,

(4) die Grundschicht wird mindestens teilgehärtet,
(5) auf die Grundschicht und die Schleifmittelkörner wird die Einbettungsschicht aufgetragen, und
(6) die Grundschicht und die Einbettungsschicht werden ausgehärtet,
wobei mindestens einer der Härtesschritte mit elektromagnetischer Strahlung Ultraviolettstrahlung ist.

14. Verfahren nach Anspruch 13, dadurch gekennzeichnet, daß die elektromagnetische Strahlung Ultraviolettstrahlung ist.

15. Verfahren nach Anspruch 13, dadurch gekennzeichnet, daß die elektromagnetische Strahlung eine ionisierende Strahlung ist.

16. Verfahren nach Anspruch 15, dadurch gekennzeichnet, daß die ionisierende Strahlung eine Elektronenstrahl-Strahlung ist.

17. Verfahren nach einem der Ansprüche 13 bis 16, in dem das gehärtete überzogene Schleifmittelprodukt mit Wärmeenergie nachgehärtet wird.

18. Beschichtetes Schleifmittelprodukt mit Schleifmittelkörnern, die durch ein harzartiges Bindemittel auf mindestens einer Breitseite eines Tragblattes abgestützt und mit ihr verklebt sind, wobei das harzartige Bindemittel (1) mindestens ein Monomer enthält, das aus der Gruppe ausgewählt ist, die aus Isocyanuratderivaten mit mindestens einer endständigen oder angehängten Acrylatgruppe und Isocyanatderivaten mit mindestens einer endständigen oder angehängten Acrylatgruppe besteht, und (2) mindestens ein aliphatisches oder alizyklisches Acryl- oder Methacrylsäureestermonomer mit mindestens einer endständigen oder angehängten Acrylatgruppe enthält.

## Revendications

1. Produit abrasif enduit comprenant des granules abrasifs qui sont portés, sur au moins une surface principale d'une feuille support à laquelle ils adhèrent, par une couche structurale faite d'un premier liant résineux et une couche d'apprêt faite d'un second liant résineux, au moins un dudit premier liant résineux ou dudit second liant résineux comprenant un copolymère formé à partir d'un mélange comprenant (1) au moins un monomère choisi parmi l'ensemble constitué par les dérivés d'isocyanurate ayant au moins un groupe acrylate terminal ou latéral et les dérivés d'isocyanate ayant au moins un groupe acrylate terminal ou latéral et (2) au moins un monomère constitué d'un ester d'acide acrylique ou méthacrylique aliphatique ou cycloaliphatique ayant au moins un groupe acrylate terminal ou latéral.

2. Produit abrasif selon la revendication 1, dans lequel le rapport du dérivé d'isocyanurate ou d'isocyanate monomère au monomère aliphatique ou cycloaliphatique ayant au moins un groupe acrylate terminal ou latéral se situe dans la gamme d'environ 1/3 à 3/1.

3. Produit abrasif selon la revendication 2, dans lequel le rapport du dérivé d'isocyanurate ou d'isocyanate monomère au monomère aliphatique ou cycloaliphatique ayant au moins un groupe acrylate terminal ou latéral se situe dans la gamme d'environ 1/1,5 à 1,5/1.

4. Produit abrasif selon l'une quelconque des revendications précédentes, dans lequel le dérivé d'isocyanurate monomère est représenté par la formule

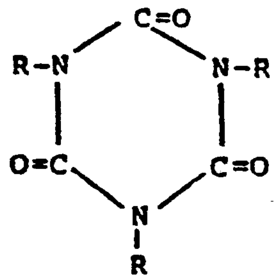

dans laquelle les symboles R peuvent être identiques ou différents et représentent chacun un groupe contenant au moins un groupe acrylate ou méthacrylate terminal ou latéral.

5. Produit abrasif selon la revendication 4, dans lequel R est choisi parmi l'ensemble constitué par

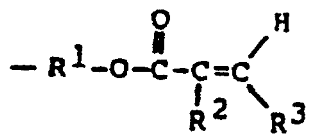

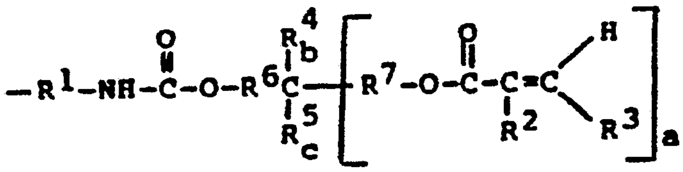

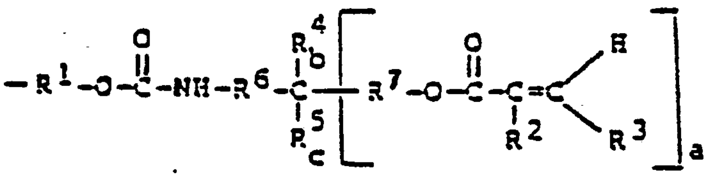

où

$R^1$ représente un groupe alkylène divalent,

$R^2$ représente –H ou –$CH_3$,

$R^3$ représente –H ou –$CH_3$,

$R^4$ représente –H, un groupe alkyle ou un groupe arylalkyle,

$R^5$ représente –H, un groupe alkyle ou un groupe arylalkyle,

$R^6$ représente un groupe alkylène divalent,

$R^7$ représente une liaison covalente ou un groupe alkylène divalent,

a représente un entier de 1 à 3 inclusivement,

b représente 0 ou 1,

c représente 0 ou 1, et

$a + b + c = 3$.

6. Produit abrasif selon l'une quelconque des revendications 1 à 3, dans lequel ledit dérivé d'isocyanate monomère est représenté par la formule:

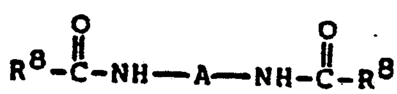

dans laquelle A représente un groupe alkylène divalent, les symboles $R^8$ identiques ou différents et représentent chacun

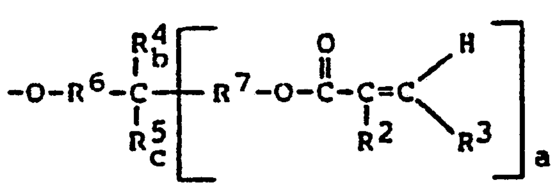

où

$R^2$ représente –H ou –$CH_3$,

$R^3$ représente –H ou –$CH_3$,

$R^4$ représente –H, un groupe alkyle ou un groupe arylalkyle,

$R^5$ représente –H, un groupe alkyle ou un groupe arylalkyle,

$R^6$ représente un groupe alkylène divalent,

$R^7$ représente une liaison covalente ou un groupe alkylène divalent,

a représente un entier de 1 à 3 inclusivement,
b représente 0 ou 1,
c représente 0 ou 1, et
a + b + c = 3.

7. Produit abrasif selon l'une quelconque des revendications précédentes, dans lequel ledit monomère aliphatique ou cycloaliphatique ayant au moins un groupe acrylique est représenté par la formule:

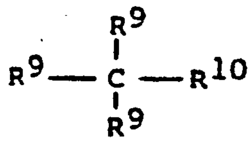

dans laquelle
les symboles $R^9$ peuvent être semblables ou différents, et représentent chacun –H ou

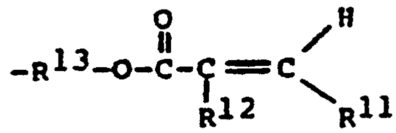

$R^{10}$ représente un groupe alkyle,
$R^{11}$ représente –H ou $-CH_3$,
$R^{12}$ représente –H ou $-CH_3$ et
$R^{13}$ représente une liaison covalente ou un groupe alkylène divalent,
au moins un desdits symboles $R^9$ n'étant pas –H.

8. Produit abrasif selon l'une quelconque des revendications précédentes, dans lequel lesdits granules abrasifs sont choisis parmi l'ensemble constitué par les silex, grenat, oxyde d'aluminium, alumine/zircone, diamant et carbure de silicium.

9. Produit abrasif selon l'une quelconque des revendications précédentes, dans lequel ledit premier liant résineux est ledit copolymère et ledit second liant résineux est choisi parmi l'ensemble constitué par les colles de gélatine, vernis, résine époxyde, résine phénolique et polyuréthanne.

10. Produit abrasif selon l'une quelconque des revendications 1 à 8, dans lequel ledit premier liant résineux est choisi parmi l'ensemble constitué par les colle de gélatine, vernis, résine époxyde, résine phénolique et polyuréthanne, et ledit second liant résineux est ledit copolymère.

11. Produit abrasif selon l'une quelconque des revendications précédentes, dans lequel ladite feuille support est formée de papier, d'un film polymère, de fibres vulcanisées ou d'une étoffe.

12. Produit abrasif selon l'une quelconque des revendications précédentes, dans lequel ledit mélange comprend de plus un catalyseur de durcissement thermique.

13. Procédé pour préparer un produit abrasif enduit selon la revendication 1, comprenant les étapes consistant à:
(1) faire appel à une feuille support,
(2) appliquer ladite couche structurale à ladite feuille support,
(3) appliquer des granules abrasifs sur ladite couche structurale,
(4) durcir au moins partiellement ladite couche structurale,
(5) appliquer ladite couche d'apprêt sur ladite couche structurale et lesdits granules abrasifs, et
(6) durcir complètement lesdites couches structurale et d'apprêt dans lequel au moins une desdites étapes de durcissement est effectuée au moyen d'un rayonnement électromagnétique.

14. Procédé selon la revendication 13, dans lequel ledit rayonnement électromagnétique est un rayonnement ultraviolet.

15. Procédé selon la revendication 13, dans lequel ledit rayonnement électromagnétique est un rayonnement ionisant.

16. Procédé selon la revendication 15, dans lequel ledit rayonnement ionisant est un rayonnement constitué d'un faisceau d'électrons.

17. Procédé selon l'une quelconque des revendications 13 à 16, comprenant de plus l'étape de postdurcissement dudit produit abrasif enduit durci au moyen d'énergie thermique.

18. Produit abrasif enduit comprenant des granules abrasifs qui sont portés sur au moins une surface principale d'une feuille support à laquelle ils adhèrent par un liant résineux, ledit liant résineux comprenant un copolymère formé à partir d'un mélange comprenant (1) au moins un monomère choisi parmi l'ensemble constitué par les dérivés d'isocyanurate ayant au moins un groupe acrylate terminal ou latéral et les dérivés d'isocyanate ayant au moins un groupe acrylate terminal ou latéral et (2) au moins un monomère fait d'un ester d'acide acrylique ou méthacrylique aliphatique ou cycloaliphatique ayant au moins un groupe acrylate terminal ou latéral.